# EUROPEAN PATENT APPLICATION

(11) **EP 4 484 782 A1**
(43) Date of publication of application: **01.01.2025**
(21) Application number: 23756079.2
(22) Date of filing: 19.01.2023
(51) Int. Cl.: F16C 29/12, F16C 29/04

(54) **LINEAR GUIDE DEVICE**

(30) Priority: 21.02.2022 JP 2022024587
(71) Applicant: Sugatsune Kogyo Co., Ltd., Tokyo 101-8633 (JP)
(72) Inventor: ISHIGAYA Kazuyuki, Tokyo 101-8633 (JP); YOSHIOKA Osamu, Tokyo 101-8633 (JP); KURODA Yukiko, Tokyo 101-8633 (JP)
(74) Representative: Daub, Thomas
(86) International application number: PCT/JP2023/001488
(87) International publication number: WO 2023/157551

(57) **Abstract**

Provided with a linear guide device capable of automatically optimizing a contact between a guide surface of a guide rail and a roller of a traveling body. A guide rail 1 includes a pair of guide portions 3 and an opening portion 4. Each of the guide portions 4 includes a first guide surface 3a and a second guide surface 3b. A traveling body 5 includes a first holder 10 and a second holder 30. A plurality of first rollers 30 is rotatably supported on the first holder 10 so that each of the first rollers 30 is configured to roll on the first guide surface 3a of the pair of guide portions 3. A plurality of second rollers 40 is rotatably supported on the second holder 30 so that each of the second rollers 40 is configured to roll on the second guide surface 3b of the pair of guide portions 3. The linear guide device further includes: a single connecting shaft member 8 and a friction imparting portion P. The first holder 10 and the second holder 30 are connected to each other by the connecting shaft member 8 so that the first holder 10 and the second holder 30 can be relatively rotated and relatively displaced in the right-left direction. The friction imparting portion P restricts the relative rotation and the relative displacement in the right-left direction between the first holder 10 and the second holder 30.

## Description

### TECHNICAL FIELD

The present invention relates to a linear guide device including a guide rail having a linearly extended shape and a traveling body configured to travel along the guide rail.

### BACKGROUND ART

A linear guide device for making a traveling body travel precisely and stably is conventionally known. In the above described linear guide device, the guide rail includes a pair of guide portions facing in a first direction orthogonal to a longitudinal direction and an opening portion opened toward one side in a second direction orthogonal to both the longitudinal direction and the first direction. Each of the guide portions includes a first guide surface which is located farther from the opening portion and a second guide surface which is located nearer to the opening portion. The first guide surface of one of the pair of guide portions is inclined to separate from the first guide surface of the other of the pair of guide portions toward the opening portion. The second guide surface of one of the pair of guide portions is inclined to approach to the second guide surface of the other of the pair of guide portions toward the opening portion. The traveling body of the linear guide device includes a plurality of rollers rolling on the first guide surface of the pair of guide portions and a plurality of rollers rolling on the second guide surface of the pair of guide portions.

Patent Document 1 (Japanese Unexamined Patent Application Publication No. 2000-320228) discloses an improved linear guide device as a prior art document. In the above described linear guide device, the traveling body includes a holder divided into two parts (i.e., a main holder and a sub holder). A first roller rolling on the first guide surface is rotatably supported on the main holder. A second roller rolling on the second guide surface is rotatably supported on the sub holder. The main holder and the sub holder are connected to each other so that the interval between the main holder and the sub holder in the second direction can be adjusted by a plurality of adjustment screws.

In the linear guide device shown in Patent Document 1, the first and second rollers can be adjusted to abut on the first and second guide surfaces respectively by the plurality of adjustment screws. Note that the guide surface to which the first roller of the main holder is abutted and the guide surface to which the second roller of the sub holder is abutted can be reversed to each other in the above described linear guide device.

### DISCLOSURE OF THE INVENTION

### [Problems to be Solved by the Invention]

In a general linear guide device, the installing position of the rollers of the traveling body includes an error. Thus, a part of the rollers abuts on the guide surface strongly while the other parts of the rollers abut on the guide surface only slightly due to the error in some cases. In Patent Document 1, although the abutment of the rollers to the guide surfaces can be adjusted by adjusting the interval between the main holder and the sub holder, it is difficult to compensate a minute installation error of the rollers.

### [Means for Solving the Problem]

The present invention is made for solving the above described problem. A linear guide device of the present invention includes: a guide rail having a linearly extended shape; and a traveling body configured to travel along the guide rail, wherein the guide rail includes a pair of guide portions which are arranged to face each other in a first direction orthogonal to a longitudinal direction of the guide rail, the guide rail includes an opening portion opened toward one side in a second direction orthogonal to both the longitudinal direction and the first direction, each of the pair of guide portions includes a first guide surface and a second guide surface, the first surface being located farther from the opening portion than the second guide surface, the second guide surface being located nearer to the opening portion than the first guide surface, the first guide surface of one of the pair of guide portions is inclined to separate from the first guide surface of the other of the pair of guide portions toward the opening portion, the second guide surface of one of the pair of guide portions is inclined to approach to the first guide surface of the other of the pair of guide portions toward the opening portion, the traveling body includes a first holder and a second holder, a first roller configured to roll on the first guide surface of the pair of guide portions is rotatably supported by one of the first holder and the second holder, a second roller configured to roll on the second guide surface of the pair of guide portions is rotatably supported by the other of the first holder and the second holder, a connecting shaft member extended in the second direction and a friction imparting portion are further provided, the first holder and the second holder are connected to each other by the connecting shaft member so that the first holder and the second holder can be relatively displaced in the first direction, and a relative displacement between the first holder and the second holder is restricted by the friction imparting portion.

In the above described configuration, when assembling the traveling body in the guide rail, the relative position of the first and second holders in the first direction is changed by the abutment between the first/second guide surfaces of the guide rail and the first/second rollers against the frictional resistance of the friction imparting portion. Consequently, a manufacturing error of the traveling body including an assembling error of the rollers is automatically compensated. Thus, the abutment state of the first and second rollers to the first and second guide surfaces can be optimized. As a result, the traveling body can be traveled stably. In a state that the traveling body is incorporated in the guide rail, the relative position of the first and the second holders is restricted by the frictional resistance at the friction imparting portion. Thus, the first and second rollers can be rolled on the first and second guide surfaces stably.

Preferably, the connecting shaft member is formed by a single member, and the first holder and the second holder are connected to each other by the connecting shaft member so that the first holder and the second holder can be relatively displaced in the first direction and relatively rotated around the connecting shaft member.

In the above described configuration, when assembling the traveling body in the guide rail, the function of compensating the assembling error of the rollers and the like can be further increased because the first holder and the second holder are relatively rotated.

Preferably, the connecting shaft member is inserted into a hole of a connecting portion of the first holder and another hole of another connecting portion of the second holder, at least one of the holes of the first holder and the second holder is a through hole, and a clearance is formed between an inner periphery of the through hole and an outer periphery of the connecting shaft member so that the first holder and the second holder can be relatively moved in the first direction.

Preferably, the connecting portions connecting the first holder and the second holder are connected to each other by the connecting shaft member while facing to each other via a gap formed in the second direction and receiving a force approaching to each other, the first holder and the second holder are in contact with each other at an abutting portion separating from the connecting portions, and the abutting portion is provided as the friction imparting portion.

In the above described configuration, the configuration of the friction imparting portion can be simplified.

Preferably, the first holder includes a base portion which has a plate shape arranged on an outside of the guide rail, the second holder includes abutting pieces on both sides in the first direction, the abutting pieces being inclined with respect to the base portion, and the abutting portion between the abutting piece and the base portion is provided as the friction imparting portion.

In the above described configuration, since the elasticity of the inclined abutting piece is utilized, the frictional resistance can be obtained in the abutting portion at a desired level.

Preferably, an end portion of the abutting piece is thinner than the other portion of the abutting piece.

In the above described configuration, the frictional resistance can be obtained more certainly in the abutting portion at a desired level.

Preferably, the connecting shaft member includes a shaft portion provided with a male screw and a head portion formed on one end of the shaft portion, at least one of the holes of the first holder and the second holder is provided as a through hole, and the other of the holes of the first holder and the second holder is provided as a screw hole, the shaft portion of the connecting shaft member is inserted into the through hole and screwed into the screw hole so that the first holder and the second holder are connected to each other and the first holder and the second holder receive a force approaching to each other.

In the above described configuration, the level of the frictional resistance applied by the friction imparting portion can be optimally controlled by adjusting the amount of screwing the connecting shaft member.

Preferably, all rollers including the first roller and the second roller are symmetrically with respect to a first reference line passing through the connecting shaft member and extending in the longitudinal direction and symmetrically with respect to a second reference line passing through the connecting shaft member and extending in the first direction.

In the above described configuration, the traveling body can be travelled more stably.

### [Effects of the Invention]

In the present invention, the manufacturing error of the traveling body including the assembling error of the rollers can be automatically compensated when incorporating the traveling body in the guide rail. Thus, the abutment state of the first and second rollers to the first and second guide surfaces can be optimized.

### BRIEF DESCRIPTION OF THE DRAWINGS

Fig. 1 is a perspective view of a linear guide device concerning the first embodiment of the present invention viewed from the above while being disassembled into a guide rail and a traveling body.
Fig. 2 is a top view of the linear guide device.
Fig. 3 is a front view of the guide rail and the traveling body in a disassembled state.
Fig. 4 is a perspective view of the traveling body viewed from the above while being disassembled into components.
Fig. 5 is a front view of a main assembly and a sub assembly of the traveling body in a disassembled state.
Fig. 6 is a bottom view of the main assembly and the sub assembly of the traveling body in a disassembled state.
Fig. 7 is a bottom view of the traveling body.
Fig. 8 is a cross-sectional view in the direction of an A-A arrow of Fig. 7.
Fig. 9 is a cross-sectional view in the direction of a B-B arrow of Fig. 7.
Fig. 10 is a front view viewed in the direction of a C-C arrow of Fig. 7 in a state that the traveling body is attached to the guide rail.
Fig. 11 is a cross-sectional view in the direction of a D-D arrow of Fig. 7 in a state that the traveling body is attached to the guide rail.
Fig. 12 is a bottom view of the traveling body of the linear guide device concerning the second embodiment of the present invention.
Fig. 13 is a bottom view of the traveling body of the linear guide device concerning the third embodiment of the present invention.
Fig. 14 is a front view of the traveling body of the linear guide device concerning the fourth embodiment of the present invention.

### MODES FOR CARRYING OUT THE INVENTION

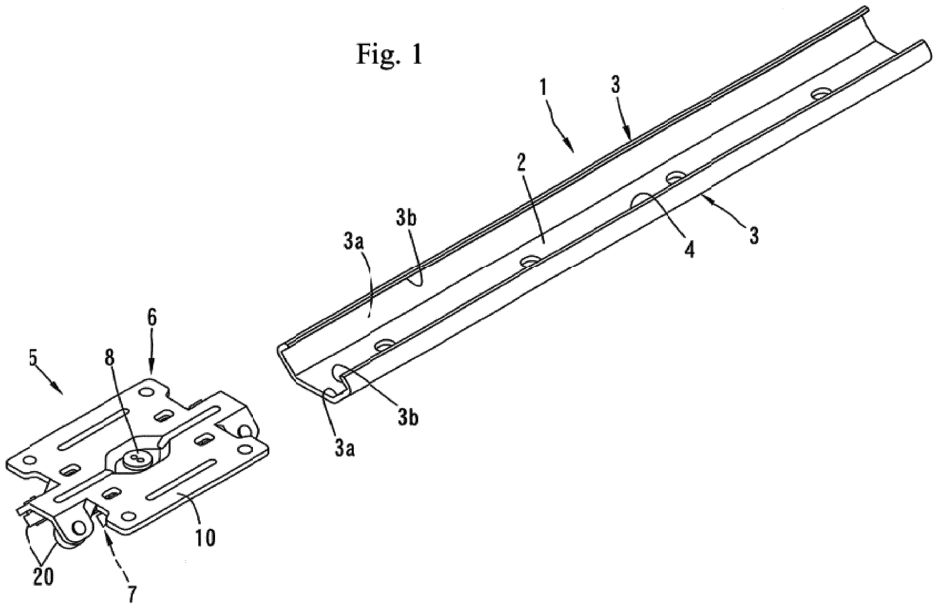

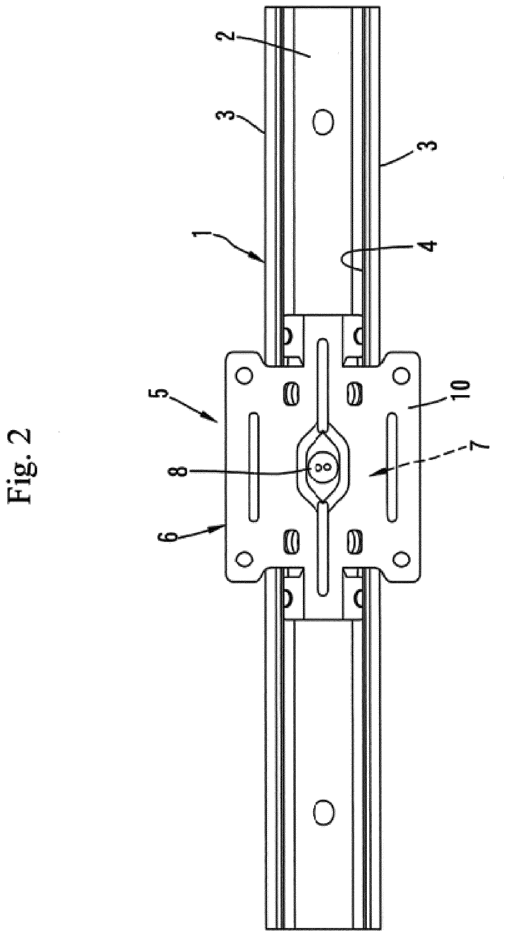

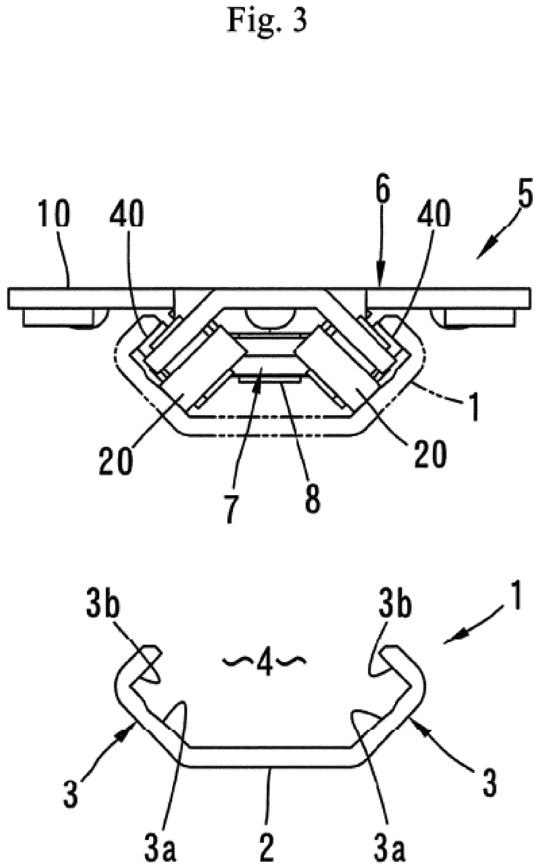

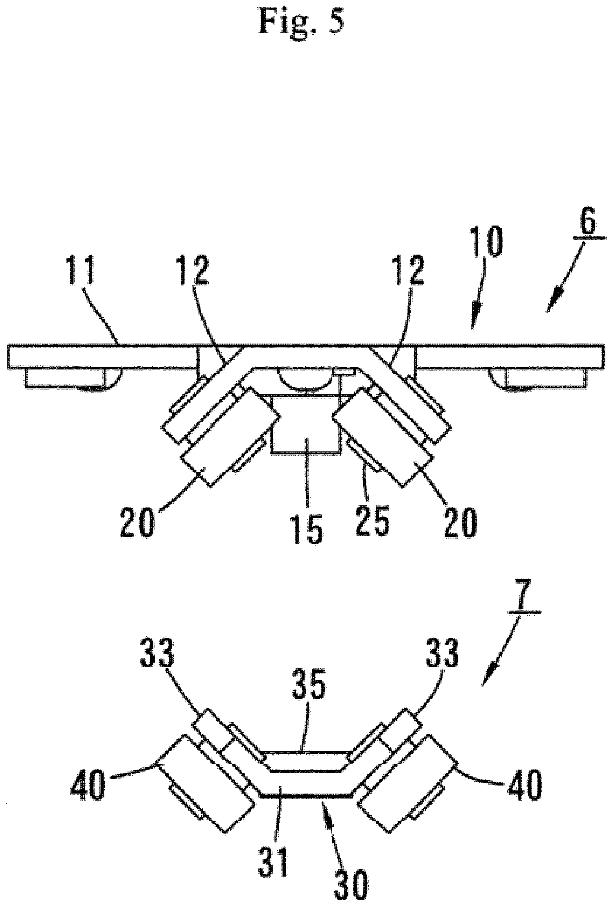

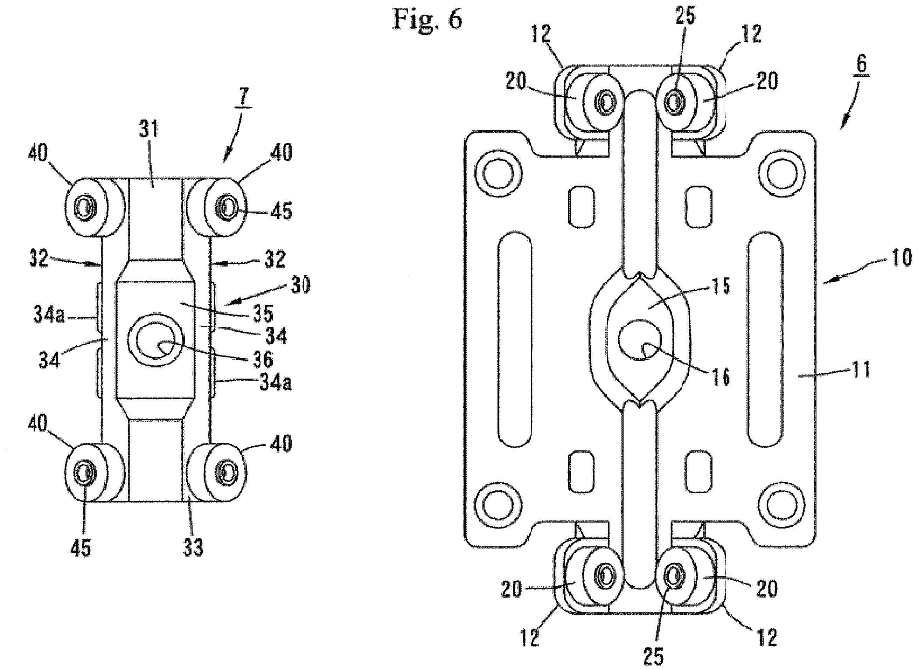

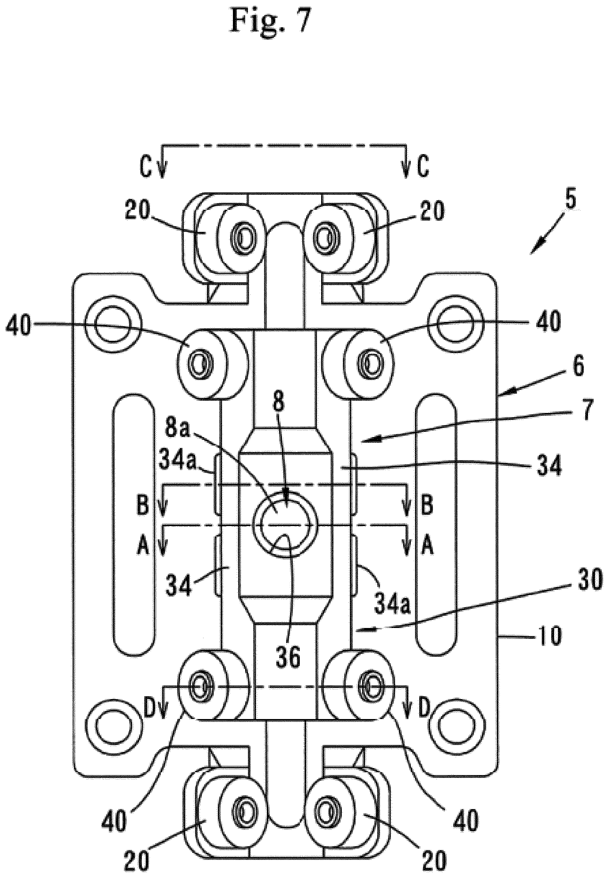

Hereafter, the linear guide device concerning the first embodiment of the present invention will be explained with reference to Fig. 1 to Fig. 11. As shown in Fig. 1 to Fig. 3, the linear guide device includes a guide rail 1 having a linearly extended shape (i.e., long shape) and a traveling body 5 configured to travel along a longitudinal direction of the guide rail 1. In the present invention, the guide rail 1 is horizontally arranged on the lower side while the traveling body 5 is arranged on the upper side. In the following explanation, the longitudinal direction of the guide rail 1 is also referred to as a travelling direction.

### <Configuration of guide rail>

The guide rail 1 includes a base portion 2 which has a long plate shape, a pair of guide portions 3 which have a long shape and are arranged to face each other in a right-left direction or a width direction (i.e., first direction orthogonal to the longitudinal direction) of the guide rail 1, and an opening portion 4 formed between the pair of guide portions 3. The base portion 2 and the opening portion 4 are arranged to face each other in an up-down direction (i.e., second direction orthogonal to both the longitudinal direction and the first direction). The base portion 2 is fixed to the upper surface of the first object such as a static object.

Each of the guide portions 3 has a bent plate shape. The inner surfaces of each of the guide portions 3 are provided as a flat first guide surface 3a and a flat second guide surface 3b. The first guide surface 3a which is located at the lower side and nearer to the base portion 2 is connected to the base portion with an obtuse angle of 135°. The second guide surface 3b which is located at the upper side and nearer to the opening portion 4 is connected to the first guide surface 3a at an angle of 90°. The first guide surface 3a of one of the pair of guide portions 3 is inclined to separate from the first guide surface 3a of the other of the pair of guide portions 3 toward the opening portion 4. The second guide surface 3b of one of the pair of guide portions 3 is inclined to approach to the second guide surface 3b of the other of the pair of guide portions 3 toward the opening portion 4.

### <Schematic configuration of traveling body>

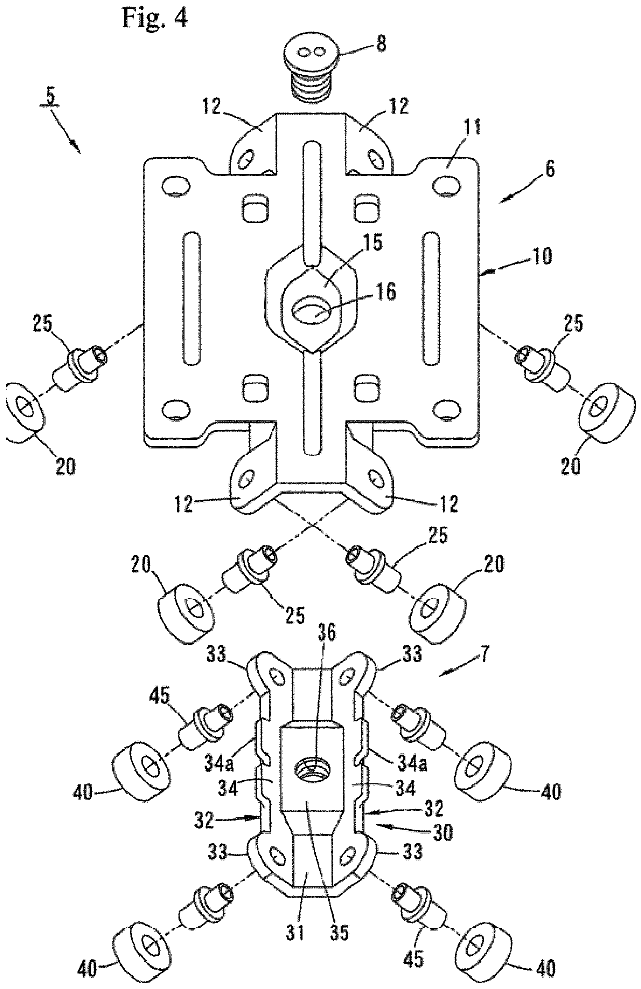

As shown in Fig. 1 to Fig. 3, the traveling body 5 is formed by connecting a main assembly 6 (first assembly) and a sub assembly 7 (second assembly) with a single connecting shaft member 8 at the center of the main assembly 6 and the sub assembly 7. As shown in Fig. 4 to Fig. 6, the main assembly 6 is configured to support a plurality of (e.g. four) rollers 20 (first rollers) by a main holder 10 (first holder) so that the rollers 20 can be rotated. The sub assembly 7 is configured to support a plurality of (e.g. four) rollers 40 (second rollers) by a sub holder 30 (second holder) so that the rollers 40 can be rotated.

### <Configuration of main assembly>

The main holder 10 includes a base portion 11 having a rectangular plate shape and two pairs of roller holding portions 12 formed on both end portions of the base portion 11 in the travelling direction. The base portion 11 is configured to be fixed to the lower surface of the second object such as a moving object. The roller holding portions 12 of each pair face to each other in the right-left direction. The roller holding portions 12 of each pair are inclined with respect to the base portion 11 at an angle of 45° and extended below to separate from each other.

The roller 20 is connected to each of the roller holding portions 12 by a roller shaft member 25 so that the roller 20 can be rotated. Briefly, the roller 20 includes an inner ring portion and an outer ring portion rotatably supported by the inner ring portion via a bearing. The inner ring portion of the roller 20 is fixed to the roller holding portion 12 by the roller shaft member 25 inserted through a hole of the roller holding portion 12. The outer ring portion of the roller 20 can be rotated around the roller shaft member 25. The rotation axes of the rollers 20 supported by the pair of the roller holding portions 12 are crossed with each other at an angle of 90°.

A boss portion 15 (connecting portion) protruded downward is formed on a center portion of the base portion 11 of the main holder 10. A through hole 16 (hole) is formed on the boss portion 15. The positions of the four rollers 20 are symmetrical to each other with respect to a reference line passing through the through hole 16 and extending in the travelling direction and a reference line passing through the through hole 16 and extending in the right-left direction. In other words, the through hole 16 is located at the center of a virtual rectangle formed by arranging the four rollers 20 at four corners. As described later, the connecting shaft member 8 is configured to be inserted in the through hole 16.

### <Configuration of sub assembly>

The sub holder 30 includes a base portion 31 extending in the longitudinal direction of the guide rail 1 and a pair of plate-shaped pieces 32 protruded upward while separating from each other at an angle of 45° from both left and right edges of the base portion 31. The both end portions of each of the plate-shaped pieces 32 in the longitudinal direction of the guide rail are provided as roller holding portions 33. The roller 40 (second roller) is supported on each of the roller holding portions 33 so that the roller 40 can be rotated by a roller shaft member 45. Consequently, two pairs of rollers 40 facing in the right-left direction are arranged while being separated in the travelling direction. The rotation axes of the rollers 40 are crossed with each other at an angle of 90°.

An intermediate portion of the plate-shaped piece 32 of the sub holder 30 is provided as an abutting piece 34. An end portion 34a of the abutting piece 34 is divided into two and formed thinner than the other portions of the abutting piece 34. The operation of the abutting piece 34 will be detailed later.

A boss portion 35 (connecting portion) is formed on a center portion of the base portion 31 of the sub holder 30 in the longitudinal direction. A screw hole 36 (hole) is formed on the boss portion 35. The positions of the four rollers 40 are symmetrical to each other with respect to a reference line passing through the screw hole 36 and extending in the travelling direction and a reference line passing through the screw hole 36 and extending in the right-left direction. In other words, the screw hole 36 is located at the center of a virtual rectangle formed by arranging the four rollers 40 at four corners. As described later, the connecting shaft member 8 is configured to be screwed in the screw hole 36.

### <Assembling of traveling body 5>

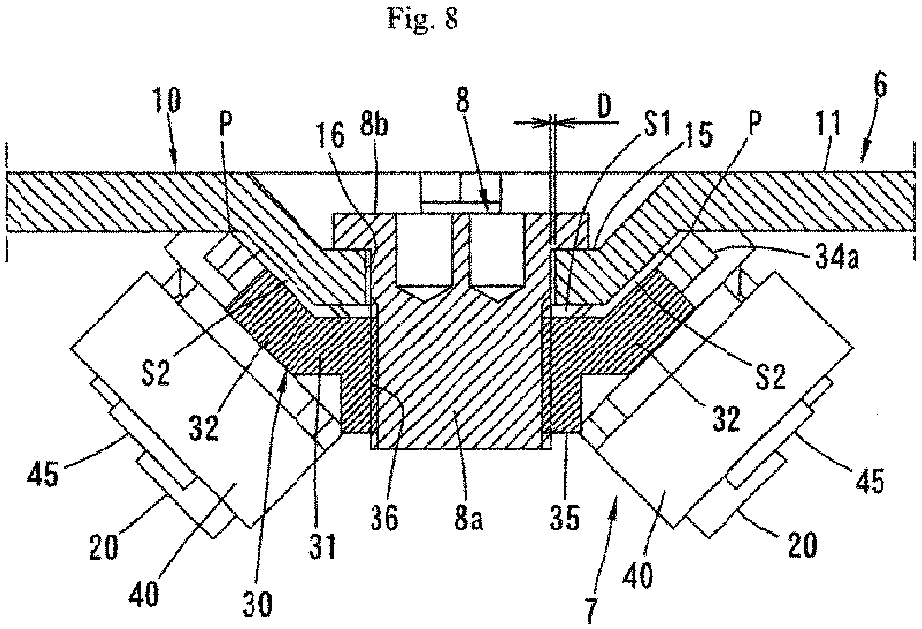

As shown in Fig. 1, Fig. 2 and Fig. 7, the main assembly 6 and the sub assembly 7 constituting the above described configuration are connected to each other at only one point by the connecting shaft member 8 extending in the up-down direction. Consequently, the traveling body 5 is assembled. As shown in Fig. 8, the connecting shaft member 8 includes a shaft portion 8a provided with a male screw on the outer periphery and a head portion 8b having a larger diameter. The main holder 10 and the sub holder 20 are aligned with each other so that the through hole 16 and the screw hole 36 are coaxial with each other. In the above described state, the shaft portion 8a of the connecting shaft member 8 is inserted through the through hole 16 and then the shaft portion 8a is screwed into the screw hole 36. Thus, the main holder 10 and the sub holder 20 are connected to each other. Furthermore, the main assembly 6 and the sub assembly 7 are connected to each other. As shown in Fig. 8, the outer diameter of the shaft portion 8a of the connecting shaft member 8 is smaller than the inner diameter of the through hole 16. Thus, a clearance D is formed between the shaft portion 8a and the through hole 16. The above described clearance D is minute. For example, the clearance D is approximately 0.2 to 0.3 mm.

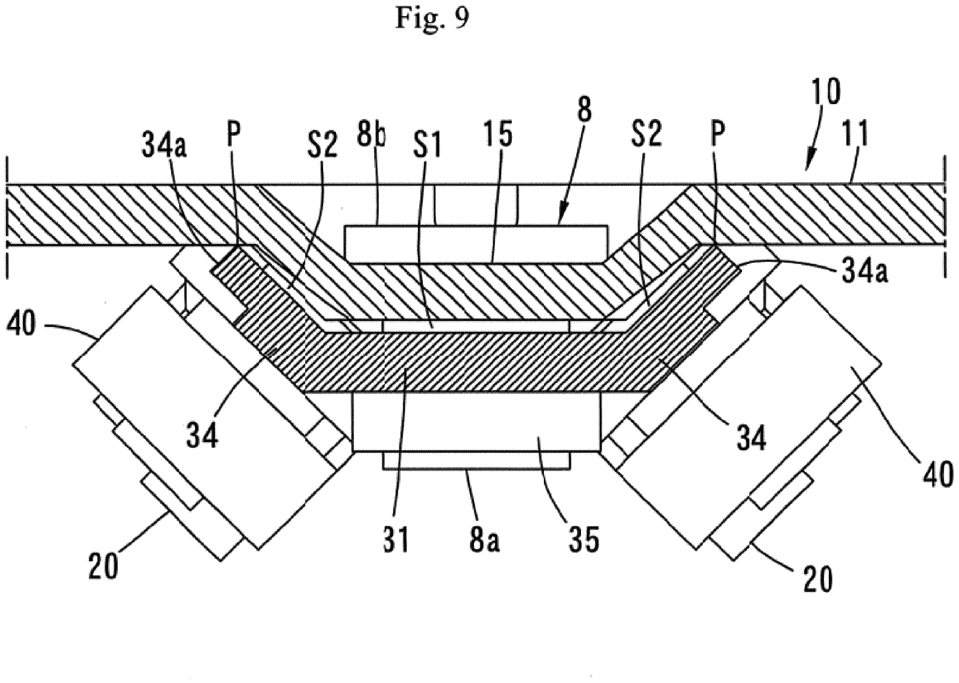

As shown in Fig. 9, in the process of screwing the connecting shaft member 8, the end portion 34a of the abutting piece 34 of the sub holder 30 abuts on the base portion 11 of the main holder 10. In Fig. 9, the above described abutting portion is shown as the reference numeral P. Furthermore, when the connecting shaft member 8 is screwed into the screw hole 36, the boss portions 15, 35 receive the force in the direction of approaching to each other. Thus, the abutting piece 34 (in particular, the end portion 34a which is the thinner portion) is elastically deformed so as to contact with the base portion 11 with an elastic force. The above described abutting portion P is provided as the friction imparting portion for achieving the later described function.

After the connecting shaft member 8 is screwed into the screw hole 36 as described above, the connecting shaft member 8 is fixed to the boss portion 35 of the sub holder 30 by an adhesive or the like. In a state that the connecting shaft member 8 is screwed, the lower surface of the boss portion 15 of the main holder 10 and the upper surface of the boss portion 35 of the sub holder 30 are not in contact with each other. A gap S1 is formed between the boss portion 15 and the boss portion 35. In addition, the inclined walls of the boss portion 15 of the main holder 10 located at both sides in the width direction and a pair of the plate-shaped pieces 32 of the sub holder 30 are not in contact with each other. A gap S2 is formed between the inclined walls and the pair of the plate-shaped pieces 32.

### <Incorporation of traveling body into guide rail>

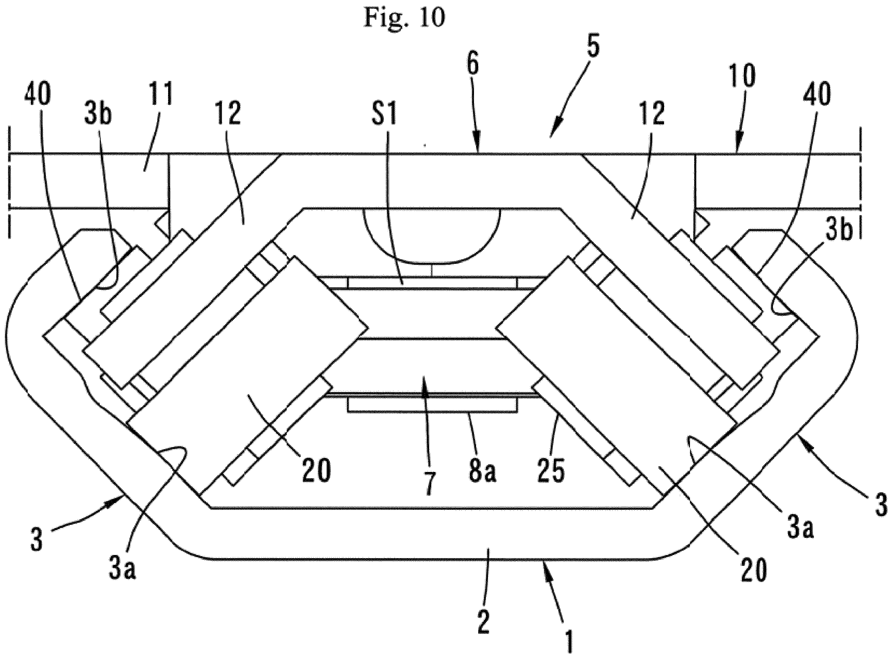

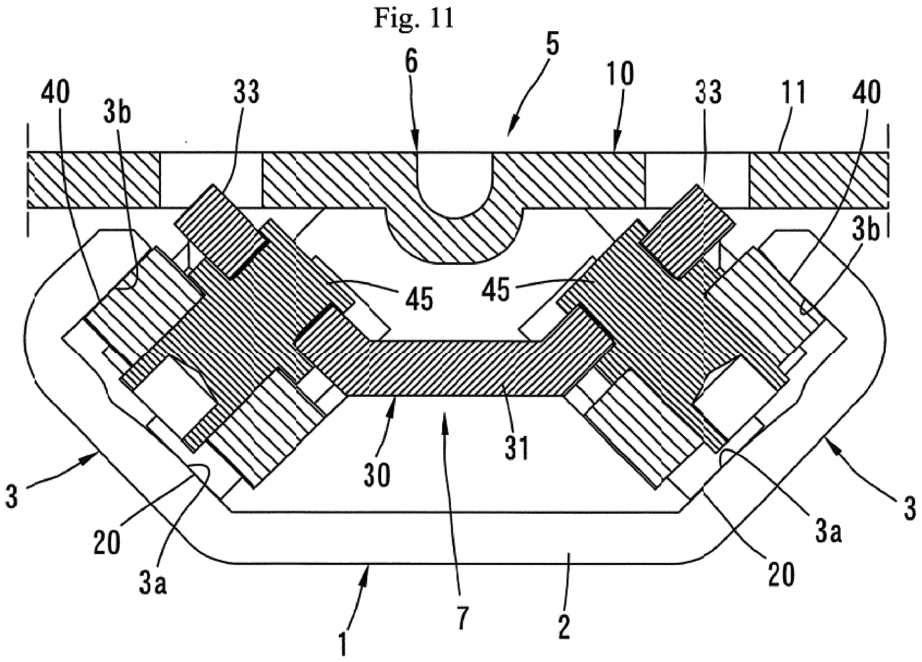

The traveling body 5 having the above described configurations is incorporated from the end of the guide rail 1. After the above described incorporation, as shown in Fig. 10 and Fig. 11, the base portion 11 of the main holder 10 of the main assembly 6 is arranged above the guide rail 1, and the roller holding portion 12 and the rollers 20 of the main holder 10 and the sub assembly 7 are housed in the guide rail 1.

In the above described incorporation state, as shown in Fig. 10, the rollers 20 of the main assembly 6 abut on the first guide surface 3a of the guide rail 1. In addition, as shown in Fig. 11, the rollers 40 of the sub assembly 7 abut on the second guide surface 3b of the guide rail 1. Consequently, when the traveling body 5 travels along the guide rail 1, the rollers 20 roll on the first guide surface 3a and the rollers 40 roll on the second guide surface 3b. The totally eight rollers 20, 40 are arranged on the positions symmetrical to each other with respect to the above described two reference lines. Thus, the rollers 20, 40 can be traveled stably.

### <Position adjustment of rollers>

If the totally eight rollers 20, 40 are supported on a single holder, it is difficult to make the rollers 20, 40 abut on the guide surfaces 3a, 3b of the guide rail 1 in an optimum state due to a mounting error or the like. However, in the present embodiment, the rollers are divided into one roller group comprised of four rollers 20 supported by the main holder 10 and the other roller group comprised of four rollers 40 supported by the sub holder 30. Thus, the main holder 10 and the sub holder 30 can be relatively rotated around the connecting shaft member 8. In addition, the main holder 10 and the sub holder 30 can be relatively moved in the right-left direction since the clearance D is formed between the connecting shaft member 8 and the through hole 16. When the traveling body 5 is incorporated in the guide rail 1, since the guide surfaces 3a, 3b of the guide rail 1 and the rollers 20, 40 are abutted to each other, the first and second holders are relatively rotated and relatively moved in the right-left direction against the frictional resistance generated at the abutting portion P. Consequently, the manufacturing error of the traveling body 5 including the assembling error of the rollers 20, 40 is automatically compensated. Thus, the abutment state of the rollers 20, 40 to the guide surfaces 3a, 3b can be optimized. As a result, the traveling body can be travelled stably.

The frictional resistance generated by the abutment between the abutting piece 34 of the sub holder 30 and the base portion 11 of the main holder 10 with elasticity at the abutting portion P is relatively large. The main holder 10 and the sub holder 30 can be relatively rotated and relatively moved in the right-left direction when the traveling body 5 is incorporated in the guide rail 1. However, in a state that the traveling body 5 is incorporated in the guide rail 1, the relative rotation of the holders 10, 30 and the relative movement of the holders 10, 30 in the right-left direction are restricted by the frictional resistance generated at the abutting portion P. Thus, the rollers 20, 40 can be rolled on the guide surfaces 3a, 3b stably.

In the present embodiment, the main holder 10 and the sub holder 30 are connected to each other by screwing the connecting shaft member 8 into the screw hole 36 of the sub holder 30. Thus, the strength of the frictional resistance at the abutting portion P can be adjusted by adjusting the amount of screwing the connecting shaft member 8.

Hereafter, the other embodiments of the present invention will be explained.
In the other embodiments, the same reference numerals or similar reference numerals are added to the configurations corresponding to the first embodiment. Thus, the detailed explanation of these configurations is omitted.

### <Second embodiment>

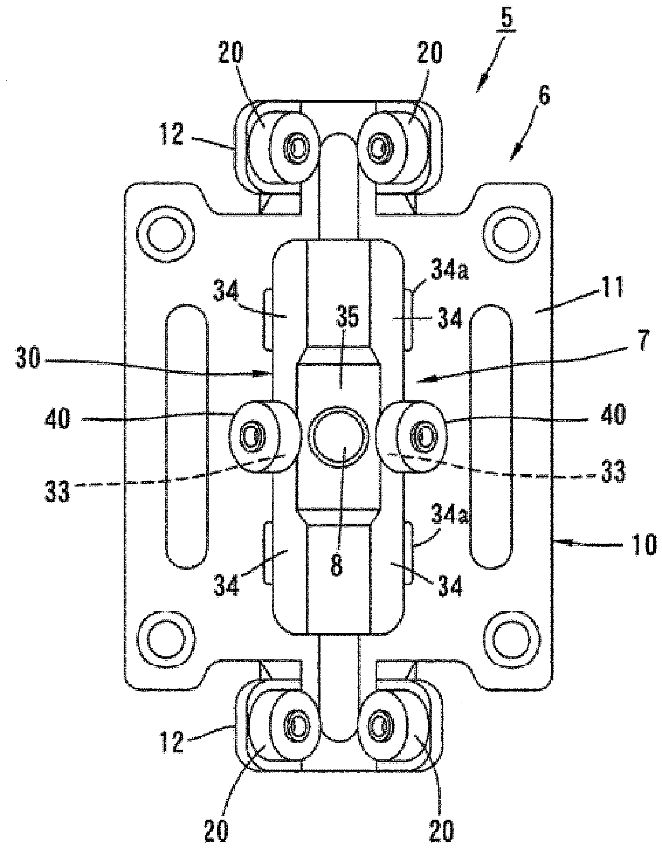

In the second embodiment shown in Fig. 12, although the configuration of the main assembly 6 of the traveling body 5 is same as that of the first embodiment, the arrangement of the rollers 40 of the sub assembly 7 is different from that of the first embodiment. Namely, the sub assembly 7 includes a pair of rollers 40 and the pair of rollers 40 face to each other in the right-left direction sandwiching the connecting shaft member 8. The center portion of the pair of plate-shaped pieces 32 of the sub holder 30 in the travelling direction is provided as the roller holding portions 33 and both end portions of the pair of plate-shaped pieces 32 are provided as the abutting piece 34.

### <Third embodiment>

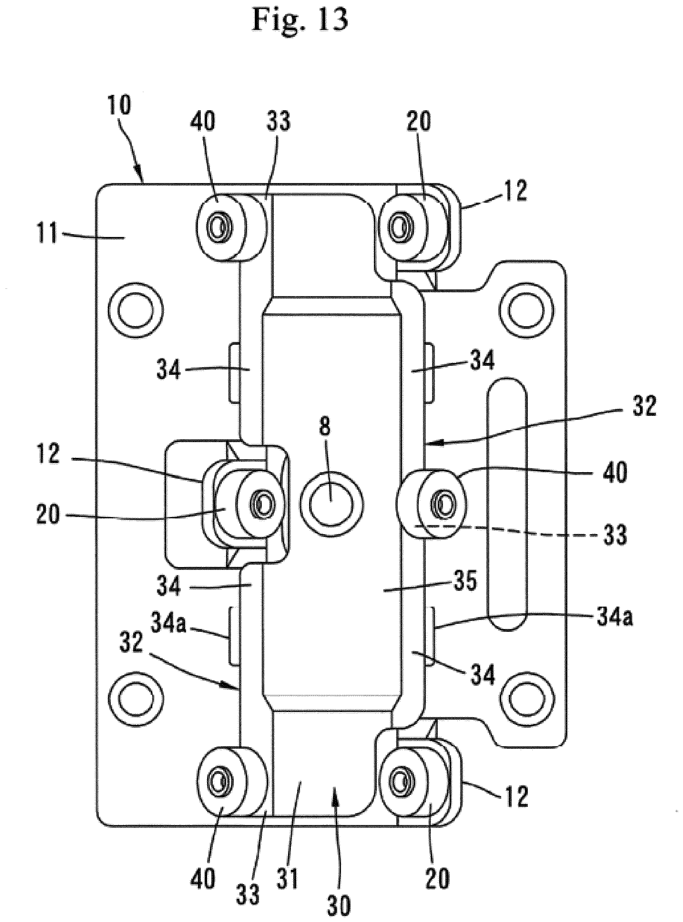

In the third embodiment shown in Fig. 13, the main assembly 6 includes three rollers 20 and the sub assembly 7 includes three rollers 40. The rollers 20, 40 form a pair to face each other in the right-left direction at three locations separating from each other in the travelling direction. At the both end portions of the main holder 10 in the travelling direction, two rollers 20 are arranged on the right side, and the two rollers 20 roll on the first guide surface 3a of the guide portions 3 located at the right side of the guide rail 1. At the center portion of the travelling direction of the main holder 10, the roller 20 is arranged on the left side, and the roller 20 rolls on the first guide surface 3a of the guide portions 3 located at the left side of the guide rail 1. On the other hand, at the both end portions of the sub holder 30 in the travelling direction, two rollers 40 are arranged on the left side, and the two rollers 40 roll on the second guide surface 3b of the guide portions 3 located at the left side of the guide rail 1. At the center portion of the sub holder 30 in the travelling direction, the roller 40 is arranged on the right side, and the roller 40 rolls on the second guide surface 3b of the guide portions 3 located at the right side of the guide rail 1.

Also in the third embodiment, similar to the first and second embodiments, the positions of the totally six rollers 20, 40 are symmetrically with respect to a reference line passing through the center of the connecting shaft member 8 and extending in the travelling direction and symmetrically with respect to a reference line passing through the center of the connecting shaft member 8 and extending in the right-left direction.

### <Fourth embodiment>

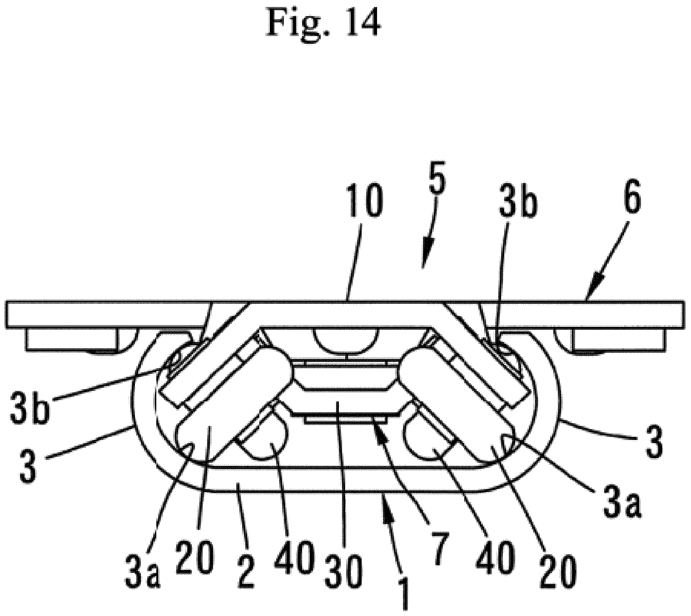

In the fourth embodiment shown in Fig. 14, the pair of guide portions 3 of the guide rail 1 is curved in a C-shape in cross section and the first guide surface 3a and the second guide surface 3b form a concave surface. Corresponding to the above described shape, a cross-sectional contour of the other peripheral portion of the rollers 20, 40 forms a convex curve. The other configurations are same as those of the first to third embodiments.

The present invention is not limited to the above described embodiments. Various forms can be adopted.

The main holder and the sub holder can be connected to each other by a plurality of connecting shaft members.

It is possible to form the through hole on the sub holder and form the screw hole on the main holder. It is also possible to connect the main holder and the sub holder to each other by forming the connecting shaft member in a pin shape without forming the screw and calking the both end portions in a state of being inserted into the through holes of the main holder and the sub holder, for example.

Although the first rollers rolling on the first guide surface are supported by the main holder (first holder) and the second rollers rolling on the second guide surface are supported by the sub holder (second holder) in the above described embodiment, it is possible to support the first rollers by the sub holder and support the second rollers by the main holder reversely.

Although the guide rail is arranged on the lower side while the traveling body is arranged on the upper side in the above described embodiment, it is possible to arrange them reversely or arrange the guide rail vertically and fix the guide rail to a wallboard or the like.

### [Industrial applicability]

The present invention can be applied to the linear guide device.

### [Description of the Reference Numerals]

1: guide rail;
3: guide portions;
3a: first guide surface;
3b: second guide surface;
4: opening portion;
5: traveling body;
8: connecting shaft member;
8a: shaft portion;
8b: head portion;
10: main holder (first holder);
11: base portion
15: boss portion (connecting portion);
16: through hole (hole);
20: rollers (first rollers);
30: sub holder (second holder);
34: abutting piece;
34a: end portion;
35: boss portion (connecting portion);
36: screw hole (hole);
40: rollers (second rollers);
P: abutting portion (friction imparting portion);
S1: gap

## Claims

1. A linear guide device comprising:
a guide rail (1) having a linearly extended shape; and
a traveling body (5) configured to travel along the guide rail, wherein
the guide rail includes a pair of guide portions (3) which are arranged to face each other in a first direction orthogonal to a longitudinal direction of the guide rail,
the guide rail includes an opening portion (4) opened toward one side in a second direction orthogonal to both the longitudinal direction and the first direction,
each of the pair of guide portions includes a first guide surface (3a) and a second guide surface (3b), the first surface being located farther from the opening portion than the second guide surface, the second guide surface being located nearer to the opening portion than the first guide surface,
the first guide surface of one of the pair of guide portions is inclined to separate from the first guide surface of the other of the pair of guide portions toward the opening portion,
the second guide surface of one of the pair of guide portions is inclined to approach to the first guide surface of the other of the pair of guide portions toward the opening portion,
the traveling body includes a first holder (10) and a second holder (30),
a first roller (20) configured to roll on the first guide surface (3a) of the pair of guide portions is rotatably supported by one of the first holder and the second holder,
a second roller (40) configured to roll on the second guide surface (3b) of the pair of guide portions is rotatably supported by the other of the first holder and the second holder,
a connecting shaft member (8) extended in the second direction and a friction imparting portion (P) are further provided,
the first holder (10) and the second holder (30) are connected to each other by the connecting shaft member (8) so that the first holder and the second holder can be relatively displaced in the first direction, and
a relative displacement between the first holder and the second holder is restricted by the friction imparting portion (P).

2. The linear guide device according to claim 1, wherein
the connecting shaft member (8) is formed by a single member, and
the first holder (10) and the second holder (30) are connected to each other by the connecting shaft member so that the first holder and the second holder can be relatively displaced in the first direction and relatively rotated around the connecting shaft member.

3. The linear guide device according to claim 1, wherein
the connecting shaft member is inserted into a hole (16) of a connecting portion (15) of the first holder and a hole (36) of a connecting portion (35) of the second holder,
at least one of the hole (16) of the first holder and the hole (36) of the second holder is a through hole (16), and
a clearance is formed between an inner periphery of the through hole and an outer periphery of the connecting shaft member so that the first holder and the second holder can be relatively moved in the first direction.

4. The linear guide device according to claim 3, wherein
the connecting portions (15, 35) of the first holder (10) and the second holder (30) are connected to each other by the connecting shaft member (8) while facing to each other via a gap formed in the second direction and receiving a force approaching to each other,
the first holder and the second holder are in contact with each other at an abutting portion separating from the connecting portions, and
the abutting portion is provided as the friction imparting portion (P).

5. The linear guide device according to claim 4, wherein
the first holder (10) includes a base portion (11) which has a plate shape arranged on an outside of the guide rail (1),
the second holder (30) includes abutting pieces (34) on both sides in the first direction, the abutting pieces being inclined with respect to the base portion, and
the abutting portion between the abutting piece and the base portion is provided as the friction imparting portion (P).

6. The linear guide device according to claim 5, wherein
an end portion of the abutting pieces (34) is thinner than the other portion of the abutting pieces.

7. The linear guide device according to claim 4, wherein
the connecting shaft member (8) includes a shaft portion (8a) provided with a male screw and a head portion (8b) formed on one end of the shaft portion,
at least one of the hole (15) of the first holder (10) and the hole (35) of the second holder (30) is provided as the through hole (16), and
the other of the hole (15) of the first holder (10) and the hole (35) of the second holder (30) is provided as a screw hole (36),
the shaft portion of the connecting shaft member is inserted into the through hole and screwed into the screw hole so that the first holder and the second holder are connected to each other and the first holder and the second holder receive a force approaching to each other.

8. The linear guide device according to claim 2, wherein
all rollers including the first roller (20) and the second roller (40) are symmetrically with respect to a first reference line passing through the connecting shaft member (8) and extending in the longitudinal direction and symmetrically with respect to a second reference line passing through the connecting shaft member and extending in the first direction.
